# EUROPÄISCHE PATENTSCHRIFT

(11) **EP 3 743 398 B1**
(45) Veröffentlichungstag und Bekanntmachung des Hinweises auf die Patenterteilung: **18.12.2024**
(21) Anmeldenummer: 19702210.6
(22) Anmeldetag: 22.01.2019
(51) Int. Cl.: C04B 26/04, C09J 171/02

(54) **VERFAHREN ZUR HERSTELLUNG EINER FUGE**
METHOD FOR PRODUCING A JOINT
PROCÉDÉ POUR RÉALISER UN JOINT

(30) Priorität: 23.01.2018 DE 102018000529
(43) Veröffentlichungstag der Anmeldung: 02.12.2020
(73) Patentinhaber: ASK Chemicals GmbH, 40721 Hilden (DE)
(72) Erfinder: KLESING, Jan, 45259 Essen (DE); WINTER, Reinhard, 42489 Wülfrath (DE); WALLENHORST, Carolin, 40219 Düsseldorf (DE)
(74) Vertreter: Vossius & Partner Patentanwälte Rechtsanwälte mbB
(86) Internationale Anmeldenummer: PCT/EP2019/051510
(87) Internationale Veröffentlichungsnummer: WO 2019/145302

(56) Entgegenhaltungen:
- EP-A2- 3 081 615
- WO-A1-2014/173513
- DE-A1- 2 438 135
- DE-A1- 2 618 629
- DE-A1- 3 233 659
- DE-B- 1 099 174
- DE-C1- 4 035 359
- EVONIK: "Unkrautschreck und Tausendsassa", ADHESIVES DAS KLEBSTOFFMAGAZIN VON EVONIK INDUSTRIES, 31 January 2013 (2013-01-31), pages 23, XP055574760, Retrieved from the Internet <URL:https://adhesives-sealants.evonik.com/product/adhesives-sealants/downloads/klebstoffmagazin-2013-01-de.pdf> [retrieved on 20190327]

## Beschreibung

### Technisches Gebiet

Die vorliegende Erfindung betrifft ein Verfahren zur Herstellung einer Fuge,

### Stand der Technik

Fugenmaterialien bzw. Fugenmörtel werden zum Füllen von Zwischenräumen unterschiedlichster Art eingesetzt wie z. B. Fugen zwischen Pflastersteinen. Die gängigen Pflastersteinbeläge werden heutzutage überwiegend mit losem Sand oder zementgebundenem Mörtel verfugt. Die mit losem Sand verfugten Pflastersteinbeläge können zwar außerordentlich gut auf Temperaturänderungen und die damit einhergehenden Fugenbreiten reagieren, allerdings durch Kehrarbeiten oder Hochdruckreiniger auch leicht aus den Fugen herausgetragen werden. Ebenso führen starke Niederschläge zu einem langsamen Herauslösen des Sandes aus der Fuge. Darüber hinaus können Insekten den losen Sand abtragen und an anderer Stelle anhäufen, wodurch ebenfalls eine Verlagerung der Sandkonzentration stattfindet und die Pflastersteine dadurch nicht mehr fest fixiert werden können.

Alternative zementgebundene Mörtel sind sehr stabil, allerdings kommt es beim Einsatz von Mörtel zu Verschmutzungen, die sich wenn überhaupt nur schwer vom Pflasterstein ablösen, oder dadurch Reinigungen nur kostenintensiv durchführen lassen. Zusätzlich kommt es in Frostperioden immer wieder zum Aufplatzen des ausgehärteten Fugenmörtels, so dass Reparatur- und Instandhaltungsarbeiten eingeplant werden müssen.

Im Profibereich sind zweikomponentige Systeme beispielsweise basierend auf Epoxidharz und Härter gängig. Für eine erfolgreiche Anwendung muss das Mischungsverhältnis von Harz und Härter exakt eingehalten werden. Als problematisch erweist sich, dass die jeweiligen Formulierungen nur eine begrenzte Verarbeitungszeit besitzen. Damit sind diese Systeme für den DIY-Bereich nur bedingt geeignet.

Um diese Nachteile zu beseitigen, haben sich einkomponentige Kunstharz-basierte Fugenmörtel im Laufe der Jahre etabliert. Die Kunstharze erfüllen dabei gleich mehrere Aufgaben. Zum einen zeigen diese Mörtel selbst im ausgehärteten Zustand einen plastischelastischen Charakter und können demnach Temperaturschwankungen und die damit einhergehenden Fugenbreitenveränderungen kompensieren, so dass stets eine geschlossene Oberfläche vorliegt. Zum anderen ist der ausgehärtete Fugenmörtel stabil genug, dass Reinigungsarbeiten und selbst heftige Niederschläge kein Heraustragen des Fugenmaterials mit sich führen. Ein weiterer Vorteil von ausgehärtetem Fugenmörtel besteht in der Verhinderung von Unkrautwachstum in der Fuge.

Die bevorzugte Möglichkeit zur Härtung von einkomponentigen Systemen ist die oxidative Vernetzung mit Luftsauerstoff.

Um eine akzeptable Aushärtung der einkomponentigen Fugenmörtelmischung zu gewährleisten, werden die eingesetzten Bindemittel vorab mit speziellen Additiven, sogenannten Sikkativen/Trockenstoffen, vermischt. Die Eigenschaften und Beispiele der Sikkative werden in Patent DE 19714825 A1 detailliert beschrieben und werden im Folgenden näher spezifiziert:
Sikkative sind ionogene Metallverbindungen, die ungesättigten Ölen und Bindemitteln zugesetzt werden, um deren Trockenzeit erheblich zu verkürzen. Als aktive Komponenten fungieren hier metallische Kationen, die eine oxidative Vernetzung der ungesättigten Verbindungen mit Luftsauerstoff herbeiführen und deren Aushärtung im Vergleich zu unsikkativierten Formulierungen signifikant beschleunigen. Herkömmliche Sikkative sind Metallseifen von z. B. Isooctansäure, Naphthensäure, Linolfettsäure, Ricinenfettsäure oder Tallölfettsäure, die durch direkte Umsetzung von Metallen und Carbonsäuren oder nach dem Fällungs- und Schmelzprozess aus den Carbonsäuren und den Metalloxiden oder -hydroxiden hergestellt werden. Die gängigen Sikkative können fest, wasserlöslich oder als wasserverdünnbare Emulsion vorliegen oder aber auch einfach in organischen Lösungsmitteln gelöst sein. Die für die oxidative Trocknung eingesetzten Standardtypen basieren auf den folgenden Metallkationen: Cobalt, Mangan, Eisen, Nickel, Zirconium, Cer, Titan und Bismut.

Um die Feuchtestabilität und Haftung des Mörtels auf dem Stein weiter zu verbessern, können Silane zugesetzt werden. Normale Zusatzmengen betragen für diesen Anwendungsbereich von 0,1 bis 5 Gew.-% bezogen auf Bindemittel. Neben einer deutlichen Verbesserung der Feuchtestabilität nehmen solche Silane ebenfalls einen positiven Einfluss auf die Härteentwicklung und fungieren darüber hinaus als ausgezeichneter Haftvermittler zwischen Harzmantel und anorganischen Oberflächen.

Für diesen Anwendungszweck geeignete Silane sind beispielsweise Aminosilane, Epoxysilane, Mercaptosilane, Hydroxysilane, Methacrylsilane, Ureidosilane, Polysiloxane, Vinylsilane und Alkylsilane.

EP 0211712 A1 beschreibt eine Bindemittelformulierung auf Basis von Polybutadienöl, welches mit Lösungsmitteln wie Xylol, Toluol oder Testbenzin zur Behandlung von porösen Baustoffen eingesetzt wird. Das Polybutadien erfüllt dabei nahezu alle Eigenschaften wie gute Alkalistabilität nach Aushärtung und dennoch elastischen Charakter, um auf Temperaturschwankungen reagieren zu können. Aufgrund der Entflammbarkeit der hier eingesetzten Lösungsmittel ist der kommerzielle Einsatz allerdings begrenzt.

Eine Weiterentwicklung wird in Patentschrift DE 40 35 359 C1 vorgestellt. Die in der Patentschrift aufgeführte Formulierung zielt auf eine verbesserte Lagerfähigkeit und Verarbeitbarkeit durch den Einsatz von aliphatischen Lösungsmitteln wie Terpentinöl ab.

DE 44 21 970 A1 beschreibt darüber hinaus eine Fugenmörtelformulierung auf Basis von Polybutadienöl, die mit unterschiedlichsten Quarzsandkorngrößen ausgestattet ist, sodass eine dichte Kugelpackung innerhalb der Fuge resultiert. So ergibt sich ein harter und dennoch elastischer Fugenmörtel.

In "Unkrautschreck und Tausendsassa", Adhesives Das Klebstoffmagazin von Evonik Industries vom 31. Januar 2013 wird die Verwendung eines flüssigen Polybutadien-basierten Mörtels (Polyvest 110) als Fugenmörtel beschrieben.

DE 1 242 573 A1 beschreibt ein bestimmtes Verfahren zum Einkapseln von Granulaten, die eine wasserlösliche Substanz enthalten, insbesondere von Düngemitteln zur verzögerten Freisetzung der wirksamen Bestandteile. Als Überzugsmittel wird im Beispiel ein Copolymerisat aus Dicyclopentadien und Leinsamenöl in Lackbenzin verwendet.

US 5,288,805 sowie US 5,693,715 beschreiben ein Copolymer aus Leinsamenöl und Dicyclopentadien, das in Beschichtungszusammensetzungen verwendet wird.

Üblicherweise wird das oxidativ trocknende Bindemittel mit einem körnigen Stoff vermischt und als Fertigmischung in den Handel gebracht. Um eine vorzeitige oxidative Trocknung in der Verpackung zu verhindern, wird das Material vakuumverpackt und damit der Luftsauerstoffeintrag verhindert. Auf diese Weise wird eine gut lagerfähige, an der Luft härtende Fugenmasse bereitgestellt.

Dennoch haben Polybutadienöl-basierte Bindemittelformulierungen ein grundsätzliches Problem: Diese Bindemittel und die daraus gefertigten Formulierungen besitzen einen starken und sehr unangenehmen Eigengeruch. Dieser Eigengeruch rührt vor allem von den verwendeten leichtflüchtigen organischen Lösungsmitteln sowie dem hohen Anteil an Polybutadienöl her. Im Stand der Technik ist die Verwendung von Lösungsmitteln beschrieben, wodurch einerseits Emissionen und damit verbundene Geruchsbelästigungen unvermeidbar sind. Außerdem kann die potenzielle Entflammbarkeit zu einem weiteren Sicherheitsrisiko führen.

Der Erfindung liegt die Aufgabe zugrunde eine Zusammensetzung bereitzustellen, die eine Fugenmasse bereitstellen kann, die eine sehr gute Flexibilität sowie ausgezeichnete Verseifungs- und Wetterstabilität aufweist. Des Weiteren sollte die Fugenmasse zumindest eine vergleichbare Festigkeit wie handelsübliche Polybutadienöl-basierte Bindemittelformulierungen aufweisen.

### Zusammenfassung der Erfindung

Die vorliegende Erfindung ist in den Ansprüchen definiert.

### Beschreibung der Figur

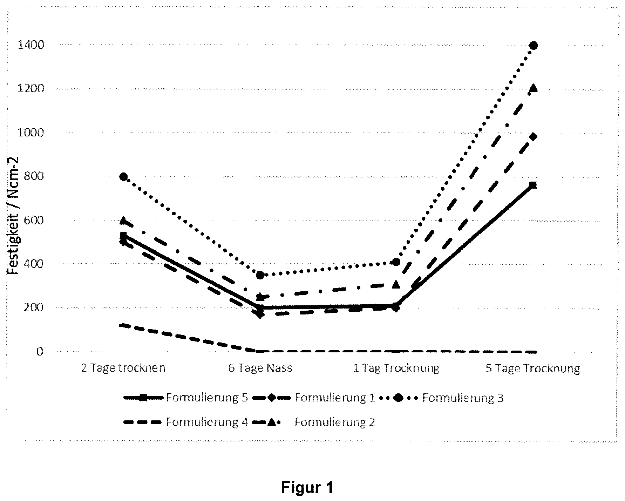

Figur 1 zeigt die ermittelte Bruchfestigkeit nach unterschiedlichen Zeitspannen und Inkubation in Wasser sowie nach anschließender Trocknung für unterschiedliche Bindemittel.

### Detaillierte Beschreibung der Erfindung

Bei dem Verfahren der vorliegenden Erfindung wird eine Zusammensetzung eingesetzt, umfassend eine Mehrzahl an wasserunlöslichen Teilchen; und ein Copolymer, das durch Polymerisation von Dicyclopentadien oder Cyclopentadien und einem Ester einer ungesättigten Fettsäure erhältlich ist.

Die wasserunlöslichen Teilchen sind nicht besonders beschränkt. Bevorzugt sind Teilchen, deren Löslichkeit in Wasser unter Normalbedingungen höchstens etwa 50 mg/l, bevorzugt höchstens etwa 45 mg/l, stärker bevorzugt höchstens etwa 40 mg/l beträgt. Unter Normalbedingungen wird eine Temperatur von 273,15 K sowie ein Druck von 101,325 kPa verstanden.

Die wasserunlöslichen Teilchen können alle wasserunlöslichen Teilchen sein, die üblicherweise für Fugenmassen verwendet werden. Hierzu zählen anorganische und organische wasserunlösliche Teilchen, bevorzugt sind anorganische wasserunlösliche Teilchen.

Die anorganischen wasserunlöslichen Teilchen können wasserunlösliche Metall- oder Halbmetallverbindungen sein, wobei die Metalle und Halbmetalle bspw. aus der 1. bis 14. Gruppe des Periodensystems, insbesondere aus Alkalimetallen, Erdalkalimetallen, Übergangsmetallen, Silicium, Aluminium oder Gemischen davon ausgewählt sind, bevorzugt sind sie aus Alkalimetallen, Erdalkalimetallen, Eisen, Silicium, Aluminium oder Gemischen ausgewählt. Alternativ können wasserunlösliche Nichtmetallelemente wie Graphit eingesetzt werden.

Die wasserunlöslichen Metall- oder Halbmetallverbindungen sind nicht besonders beschränkt und können beispielsweise aus Oxiden, Carbonaten, Hydroxiden, Silicaten, Aluminaten, Aluminosilicaten, Boraten, Sulfaten, Carbiden, Nitriden, Nitraten, Chloriden, Phosphaten oder Gemischen davon ausgewählt sein.

Beispiele für anorganische wasserunlösliche Teilchen umfassen Oxide oder Hydroxide von Si oder Al (wie SiO₂, Al₂O₃ und Al(OH)₃), Glas (wie Glaspartikel, Glaskugeln oder Hohlglaskugeln), Keramik, Oxide, Phosphate, Hydroxide oder Carbonate der Alkali- oder Erdalkalimetallverbindungen (wie CaO, MgO, MgCO₃ und CaCOs), Phosphate, Oxide, Carbonate oder Hydroxide der Übergangsmetallverbindungen (wie Titanoxid, Ceroxid und Zirconiumoxid) und SiCN, SiBCN, Siliciumcarbid oder Gemische davon.

Die anorganischen wasserunlöslichen Teilchen können synthetischen oder natürlichen Ursprungs sein. Anorganische wasserunlösliche Teilchen natürlichen Ursprungs sind bspw. Sand, Feldspat, Ton, Lehm, Talk, Minerale der Glimmergruppe, Kaolin, Kieselerde, Kreide, Dolomit, Baryt oder Gemische davon. Bevorzugt sind die wasserunlöslichen anorganischen Teilchen Sand und Feldspat, stärker bevorzugt Sand, besonders bevorzugt Quarzsand.

Die wasserunlöslichen Teilchen können organische wasserunlösliche Teilchen sein. Dazu zählen beispielsweise Holzmehl, Zellstoffe, Textilfasern, Gewebeschnitzel, Kork, Weizenspreu, Carbonfasern, Polymerteilchen und Gemische davon. Die Polymere können beispielsweise Homo- oder Copolymere (bspw. Polyolefine, Polystyrol, Polyvinylchlorid, fluorierte Polyolefine wie beispielsweise Polytetrafluorethylen, Meth(acrylate) wie PMMA (Polymethylmethacrylat), Polyamide wie PA6.6, Polyester wie Polyethylenterephthalat, Polyurethane oder Polymere auf der Basis von Polybutadien wie beispielsweise ABS) sein.

Die wasserunlöslichen Teilchen können jegliche übliche Form haben. Bevorzugt haben die wasserunlöslichen Teilchen keine sphärische Form, um die Festigkeit der Fuge zu erhöhen. Bevorzugt sind unregelmäßige Formen. Alternativ können die wasserunlöslichen Teilchen in Faserform vorliegen.

Die Größe der wasserunlöslichen Teilchen ist nicht besonders beschränkt. Bevorzugt können die wasserunlöslichen Teilchen einen mittleren Teilchendurchmesser von etwa 1 bis etwa 5000 µm, besonders bevorzugt von etwa 10 bis etwa 2000 µm aufweisen. Der mittlere Teilchendurchmesser kann mittels Siebanalyse nach DIN 66165 bestimmt werden.

Die Zusammensetzung besteht aus einer Mehrzahl an wasserunlöslichen Teilchen und einem Bindemittel. Im Rahmen der Erfindung werden alle Bestandteile der Zusammensetzung, die von der Mehrzahl an wasserunlöslichen Teilchen verschieden sind, als "Bindemittel" bezeichnet. Die Zusammensetzung enthält bevorzugt etwa 80 Gewichtsteile bis 99 Gewichtsteile wasserunlösliche Teilchen, stärker bevorzugt etwa 85 Gewichtsteile bis 98 Gewichtsteile wasserunlösliche Teilchen, noch stärker bevorzugt etwa 87 Gewichtsteile bis 98 Gewichtsteile wasserunlösliche Teilchen, bezogen auf 100 Gewichtsteile Bindemittel.

Das Copolymer, welches durch Polymerisation von Dicyclopentadien oder Cyclopentadien und einem Ester einer ungesättigten Fettsäure erhältlich ist, umfasst mindestens eine von Dicyclopentadien oder Cyclopentadien abgeleitete Einheit und mindestens eine von einem Ester einer ungesättigten Fettsäure abgeleitete Einheit.

"Dicylopentadien" (DCPD) bezeichnet das Dimer des Cyclopentadiens. DCPD (IUPAC: Tricyclo[5.2.1.0^{2,6}]deca-3,8-dien) kann durch thermische Retro-Diels-Alder Reaktion mittels Erhitzen über 150 °C in Cyclopentadien (IUPAC: Cyclopenta-1,3-dien) überführt werden. In der vorliegenden Anmeldung bezeichnet "Dicyclopentadien" oder "DCPD" sowohl das Dimer Tricyclo[5.2.1.0^{2,6}]deca-3,8-dien als auch das Monomer Cyclopenta-1 ,3-dien. Bevorzugt wird Dicyclopentadien eingesetzt.

Weiterhin kann DCPD gegebenenfalls funktionalisiert sein. Mögliche funktionelle Gruppen schließen organische sowie anorganische Gruppen mit ein.

Die Ester einer ungesättigten Fettsäure sind nicht besonders beschränkt. Bevorzugt können diese von mehrwertigen Alkoholen abgeleitet sein, weiter bevorzugt von zweiwertigen Alkoholen (wie Ethylenglykol, Butandiol, Pentandiol, Hexandiol, Heptandiol, Neopentylglykol, Diethylenglykol und/oder Triethylglykol), dreiwertigen Alkoholen (wie Glycerin, Trimethylolethan und/oder Trimethylolpropan), vierwertigen Alkoholen (wie Pentaerythrit), oder sechswertigen Alkoholen (wie Dipentaerythrit) oder Gemischen davon. Besonders bevorzugt können die Ester einer ungesättigten Fettsäure von Glycerin abgeleitet sein. Bevorzugt können die von Glycerin abgeleiteten Ester einer ungesättigten Fettsäure Triglyceride einer ungesättigten Fettsäure sein.

"Triglycerid" bezeichnet dreifache Ester des dreiwertigen Alkohols Glycerin mit einer organischen Carbonsäure. Die organischen Carbonsäuren können gleich oder voneinander verschieden sein. Somit können die Triglyceride drei gleichartige oder voneinander verschiedene Estergruppen tragen.

Die organischen Carbonsäuren können eine Fettsäure sein. Eine Fettsäure ist eine aliphatische Monocarbonsäure mit etwa 4 bis etwa 36 Kohlenstoffatomen, bevorzugt etwa 8 bis etwa 24 Kohlenstoffatomen, stärker bevorzugt etwa 12 bis etwa 20 Kohlenstoffatomen. Die Fettsäuren können geradkettig oder verzweigt, bevorzugt geradkettig sein.

Die Fettsäuren können gesättigt oder ungesättigt sein. Gemäß der vorliegenden Erfindung ist mindestens eine der organischen Carbonsäuren eine ungesättigte Fettsäure. Die ungesättigte Fettsäure kann eine oder mehrere ungesättigte Bindungen aufweisen, beispielsweise eine bis sechs ungesättigte Bindungen.

Mögliche ungesättigte Fettsäuren sind Ölsäure, Linolsäure, Linolensäure, Palmitoleinsäure, Gadoleinsäure, Eleostearinsäure, Oxoeleostearinsäure, Erucasäure, Gondosäure, Nervonsäure, Ricinolsäure, Eicosapentaensäure, Docosahexaensäure, Docosapentaensäure, Stearidonsäure und Gemische davon. In einer bevorzugten Ausführungsform ist die ungesättigte Fettsäure aus Ölsäure, Linolsäure, Linolensäure und Gemischen davon ausgewählt.

Mögliche gesättigte Fettsäuren sind Palmitinsäure, Stearinsäure, Myristinsäure, Eicosansäure, Behensäure und Gemischen davon. In einer bevorzugten Ausführungsform ist die gesättigte Fettsäure aus Palmitinsäure, Stearinsäure und Gemischen davon ausgewählt.

Die Fettsäuren können in Form eines natürlichen Gemisches aus Fettsäuren eingesetzt werden. Bevorzugt kann das natürliche Gemisch aus Fettsäuren Tallöl sein.

Der Ester kann bevorzugt in Form eines natürlichen Öls eingesetzt werden. Als natürliche Öle werden Öle bezeichnet, welche aus Pflanzen oder Tieren wie Fischen erhalten werden können. Dies ist besonders bevorzugt, da diese Verbindungen aus nachwachsenden Rohstoffen erhalten werden und deshalb besonders nachhaltig und umweltfreundlich sind.

Bevorzugte Pflanzenöle sind aus Sojaöl, Leinöl, Sonnenblumenöl, Distelöl, Rapsöl, Tungöl, Oiticikaöl, Ricinusöl, Baumwollsamenöl, Maisöl, Safloröl, Holzöl, Rüböl, Perillaöl, Mohnsamenöl, Ricineenöl, Sesamöl, Weizenkeimöl, Erdnussöl, Hanföl, Traubenkernöl, Walnussöl, Lackleinöl, Johannisbeerkernöl, Perillasamenöl, Wildrosenöl und Gemischen davon ausgewählt. Bevorzugt sind Leinöl, Sojaöl, Sonnenblumenöl, Distelöl, Rapsöl, Tungöl, Oiticikaöl, Rizinusöl, und Gemische davon. Stärker bevorzugt sind Leinöl, Sojaöl und Gemische davon. Besonders bevorzugt ist das Pflanzenöl Sojaöl. Sojaöl ist ein aus der Sojabohne (Glycine max) gewonnenes pflanzliches Öl. Sojaöl ist ein Gemisch von Triglyceriden von Fettsäuren, wobei die Fettsäuren Ölsäure, Linolsäure, Linolensäure, Palmitinsäure und Stearinsäure beinhalten. Üblicherweise liegt Ölsäure in einem Anteil von etwa 17 bis 31 Gew.-% vor, Linolsäure in einem Anteil von etwa 48 bis 59 Gew.-%, Linolensäure in einem Anteil von etwa 2 bis 11 Gew.-%, Palmitinsäure in einem Anteil von etwa 2 bis 11 Gew.-% und Stearinsäure in einem Anteil von etwa 2 bis 7 Gew.-%. Leinöl ist ein pflanzliches Öl, das aus Leinsamen, den reifen Samen von Öllein (Linum usitatissimum), gewonnen wird. Leinöl ist ein Gemisch von Trigylceriden von Fettsäuren, wobei die Fettsäuren Ölsäure, Linolsäure, Linolensäure, Palmitinsäure und Stearinsäure beinhalten. Dabei liegt Ölsäure in einem Anteil von etwa 10 Gew.-% bis etwa 22 Gew.-% vor, Linolsäure in einem Anteil von etwa 12 Gew.-% bis etwa 18 Gew.-%, Linolensäure in einem Anteil von etwa 56 Gew.-% bis etwa 71 Gew.-%, Palmitinsäure in einem Anteil von etwa 4 Gew.-% bis etwa 6 Gew.-% und Stearinsäure in einem Anteil von etwa 2 Gew.-% bis etwa 3 Gew.-%.

Bevorzugte Fischöle sind Heringstran, Menhadentran, Kabeljauöl, Walöl oder Gemische davon.

Stärker bevorzugt ist das natürliche Öl ausgewählt aus Sojaöl, Leinöl, Tungöl, Fischölen und Gemischen davon. Noch stärker bevorzugt ist Sojaöl.

Im Allgemeinen können natürliche Öle anhand ihres Gehalts an Doppelbindungen charakterisiert werden. Dies kann quantitativ anhand der lodzahl bestimmt werden. Die lodzahl ist eine Kennzahl, welche die Menge an lod in Gramm angibt, die formal an 100 g Öl addiert werden kann. Eine höhere lodzahl entspricht einem höheren Anteil an Doppelbindungen. Der Anteil an Doppelbindungen steht in Zusammenhang mit dem Trocknungsverhalten der Öle. Öle mit einer höheren lodzahl weisen ein schnelleres Trocknungsverhalten in Gegenwart von Luftsauerstoff auf. Trocknende Öle besitzen eine lodzahl von etwa 170 oder mehr, halb-trocknende Öle von etwa 100 bis etwa 170 und nicht trocknende Öle von 0 bis etwa 100. Die bevorzugten Pflanzen- oder Fischöle sind halb-trocknende und trocknende Öle mit einer lodzahl im Bereich von etwa 100 bis etwa 400, bevorzugt etwa 100 bis etwa 300, stärker bevorzugt etwa 110 bis etwa 250, noch stärker bevorzugt etwa 140 bis etwa 220. Die Bestimmung der lodzahl erfolgt nach NF EN ISO 3961; AFNOR NFT60-203.

Das Copolymer ist durch die Polymerisation von Dicyclopentadien oder Cyclopentadien und dem Ester einer ungesättigten Fettsäure erhältlich. Die Polymerisation kann unter beliebigen Bedingungen, die für die Polymerisation geeignet sind, durchgeführt werden. In einer Ausführungsform kann zum Beispiel eine Diels-Alder-Reaktion zwischen Dicyclopentadien oder Cyclopentadien und dem Ester einer ungesättigten Fettsäure erfolgen. Diese Umsetzung kann beispielsweise bei einer Temperatur von etwa 200 °C bis etwa 290 °C und einem Druck von etwa 0,05 MPa bis etwa 1,00 MPa durchgeführt werden.

Obwohl wir nicht durch die Theorie beschränkt sein möchten, wird angenommen, dass in einem ersten Schritt eine Retro-Diels-Alder Reaktion des Dicyclopentadien zu Cyclopentadien stattfindet. Es wird vermutet, dass im weiteren Reaktionsverlauf Cyclopentadien mit Doppelbindungen, welche im Ester einer ungesättigten Fettsäure vorhanden sind, unter Bildung eines Diels-Alder Reaktionsproduktes wie in dem folgenden Schema gezeigt reagiert. Im Schema bezeichnet R einen von einer gesättigten oder ungesättigten Fettsäure abgeleiteten Rest.

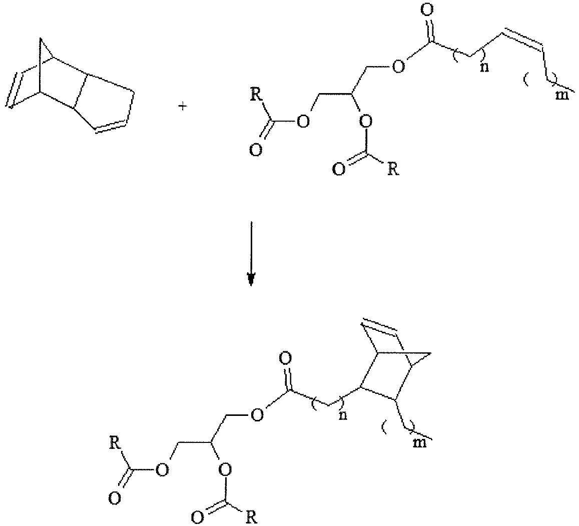

Die Werte von n und m sind nicht besonders beschränkt und hängen von der eingesetzten ungesättigten Fettsäure ab.

Unter den vorstehend beschriebenen Reaktionsbedingungen können weitere Reaktionen stattfinden, wie beispielsweise Umlagerungsreaktionen, wozu beispielsweise die cis-trans-Isomerisierung zählen oder Umlagerungsreaktionen von nicht konjugierten Dienen zu konjugierten Dienen. Diese konjugierten Diene können ihrerseits an weiteren intra- sowie intermolekularen Vernetzungsreaktionen teilnehmen, wodurch höhermolekulare Polymerisationsprodukte gebildet werden können. Ebenfalls ist eine Kettenbildung auf Basis mehrerer Cyclopentadieneinheiten, die miteinander reagieren, anzunehmen.

Das Copolymer, das durch die Polymerisation von Dicyclopentadien oder Cyclopentadien und dem Ester einer ungesättigten Fettsäure erhältlich ist, ist ein statistisches Copolymer. Das Copolymer weist ein Gewichtsmittel des Molekulargewichts von etwa 5000 bis etwa 1000000 auf, bevorzugt von etwa 10000 bis etwa 500000, besonders bevorzugt von etwa 30000 bis etwa 60000. Das Copolymer weist ein Zahlenmittel des Molekulargewichts von etwa 1000 bis etwa 3000 auf, bevorzugt von etwa 1200 bis etwa 2500, besonders bevorzugt von etwa 1400 bis etwa 2000. Die Messungen wurden mittels GPC durchgeführt.

Das Verhältnis des Esters einer ungesättigten Fettsäure und Dicyclopentadien (DCPD) bzw. Cyclopentadien (CPD) ist gemäß der vorliegenden Erfindung nicht besonders beschränkt und kann bspw. von etwa 40 : 60 bis etwa 90 : 10 Gew.-%, besonders bevorzugt im Bereich von etwa 50 : 50 bis etwa 80 : 20 Gew.-% betragen.

Der Anteil des Copolymers, das durch Polymerisation von Dicyclopentadien oder Cyclopentadien und einem Ester einer ungesättigten Fettsäure erhältlich ist, bezogen auf die Zusammensetzung, ist gemäß der Erfindung nicht besonders beschränkt. Der Anteil des Copolymers beträgt vorzugsweise von etwa 25 Gewichtsteilen bis etwa 100 Gewichtsteile, weiter bevorzugt von etwa 30 Gewichtsteilen bis etwa 90 Gewichtsteile, besonders bevorzugt von etwa 35 Gewichtsteilen bis etwa 90 Gewichtsteile, bezogen auf 100 Gewichtsteile Bindemittel.

Bevorzugt kann die dynamische Viskosität des Copolymers von etwa 5000 mPa·s bis etwa 100000 mPa·s betragen, weiter bevorzugt von etwa 10000 mPa·s bis etwa 90000 mPa·s, besonders bevorzugt von etwa 20000 mPa·s bis etwa 70000 mPa·s (gemessen mittels Brookfield CAP 2000 Viskosimeter, 75°C, Spindel 6, 100 UpM, 90 Sekunden gemäß ISO 2884).

Die Zusammensetzung kann neben der Mehrzahl an wasserunlöslichen Teilchen und dem Copolymer weitere Bestandteile enthalten.

Die Zusammensetzung kann ggf. einen Ester, bevorzugt ein Triglycerid, einer ungesättigten Fettsäure enthalten, um die Viskosität zu kontrollieren. Der Ester einer ungesättigten Fettsäure ist nicht besonders beschränkt und es wird auf die vorstehende Diskussion des Esters einer ungesättigten Fettsäure, der bei der Herstellung des Copolymers verwendet werden kann, verwiesen.

Bevorzugt ist der Ester einer ungesättigten Fettsäure gekennzeichnet durch eine lodzahl von etwa 20 bis etwa 250, bevorzugt von etwa 150 bis etwa 200, ferner durch eine Viskosität von etwa 50 bis etwa 2000 mPa·s, bevorzugt von etwa 50 bis etwa 1000 mPa·s.

Besonders bevorzugt wird Leinöl, Tungöl oder Sojaöl als Ester einer ungesättigten Fettsäure eingesetzt.

Der Anteil des Esters einer ungesättigten Fettsäure ist nicht besonders beschränkt. Bevorzugt kann der Anteil des Esters einer ungesättigten Fettsäure von etwa 0 Gewichtsteilen bis etwa 70 Gewichtsteile betragen, stärker bevorzugt von etwa 0 Gewichtsteilen bis etwa 65 Gewichtsteile, besonders bevorzugt von etwa 0 Gewichtsteilen bis etwa 60 Gewichtsteile, bezogen auf 100 Gewichtsteile Bindemittel.

Alternativ oder zusätzlich kann die Viskosität durch die Zugabe von Polybutadienöl kontrolliert werden. Als Polybutadienöl wird ein unter Normalbedingungen flüssiges 1,4-Polybutadien bezeichnet, dessen Zahlenmittel des Molekulargewichts z.B. in einem Bereich von 1500 bis 3000 g mol⁻¹ liegt. Der Anteil des Polybutadienöls bezogen auf die Gesamtmenge der Zusammensetzung ist nicht besonders beschränkt. Bevorzugt kann dieser im Bereich von etwa 0 Gewichtsteilen bis etwa 70 Gewichtsteile liegen. Weiter bevorzugt kann der Anteil in einem Bereich von etwa 0 Gewichtsteilen bis etwa 65 Gewichtsteile liegen, besonders bevorzugt im Bereich von etwa 0 Gewichtsteilen bis etwa 60 Gewichtsteile, Jeweils bezogen auf 100 Gewichtsteile Bindemittel.

Die Zusammensetzung kann ggf. zur Beschleunigung der Verfestigung ein Sikkativ enthalten. In den Zusammensetzungen können herkömmliche Sikkative wie Metallsalze von Fettsäuren, wobei die Fettsäuren von etwa 5 bis etwa 22 Kohlenstoffatome aufweisen können, wie z. B. Isooctansäure, Naphthensäure, Linolfettsäure, Ricinenfettsäure oder Tallölfettsäure, basierend auf den Metallkationen Cobalt, Mangan, Eisen, Nickel, Zirconium, Cer, Titan oder Bismut, eingesetzt werden. Bevorzugte Sikkative sind Salze der 2-Ethylhexansäure ("Octoate") oder Naphthensäure, wie Co-Octoat, Mn-Octoat, Zr-Octoat, Co-Naphthenat, Mn-Naphthenat oder Zr-Naphthenat. Besonders bevorzugt sind Co-Octoat oder Mn-Octoat, insbesondere Co-Octoat. Ebenfalls bevorzugt ist der Einsatz eines Eisenkomplexes, welcher als Borchi^{®} Oxy von Borchers GmbH, Langenfeld, kommerziell erhältlich ist. Gemische von Sikkativen können ebenfalls eingesetzt werden.

Der Anteil des Sikkativs ist nicht besonders beschränkt. Bevorzugt kann die Zusammensetzung von etwa 0 Gewichtsteilen bis etwa 5 Gewichtsteile, weiter bevorzugt von etwa 0,5 Gewichtsteilen bis etwa 4 Gewichtsteile, besonders bevorzugt von etwa 0,7 Gewichtsteilen bis etwa 3 Gewichtsteile Sikkativ bezogen auf 100 Gewichtsteile Bindemittel enthalten.

Die Zusammensetzung kann weiterhin ein Silan enthalten, um eine Steigerung der Festigkeit zu bewirken. Die Art des Silans ist nicht besonders beschränkt. Bevorzugt kann das Silan ein Amino-, Epoxy-, Mercapto-, Hydroxy-, (Meth)acryl-, Ureido-funktionalisiertes Silan, Vinylsilan oder Alkylsilan sein. Das Silan kann weitere hydrolysierbare funktionelle Gruppen enthalten. Diese können Alkoxy-, Aryloxy-, und/oder Acetoxy-Gruppen und/oder Polysiloxangruppen sein. Vorzugsweise kann das Silan aus der Gruppe der Epoxy-funktionalisierten Silane und Vinylsilane ausgewählt sein. Weiter bevorzugt kann das Silan aus der Gruppe der alkoxygruppenhaltigen Epoxy-funktionalisierten Silane oder Vinylsilane ausgewählt sein. Insbesondere bevorzugt kann das Silan das Vinylsilan Dynasylan 6498 von der Firma Evonik sein. Dynasylan 6498 ist ein vinyl- und ethoxygruppenhaltiges Vinylsilankonzentrat (oligomeres Siloxan). Bevorzugte Zusatzmengen bezogen auf 100 Gewichtsteile Bindemittel können im Bereich von etwa 0 Gewichtsteilen bis etwa 2 Gewichtsteile liegen, weiter bevorzugt von etwa 0,1 Gewichtsteilen bis etwa 1,5 Gewichtsteile, insbesondere bevorzugt von etwa 0,2 Gewichtsteilen bis etwa 1 Gewichtsteil.

Um die Geruchsbelästigung und die Umweltbelastung zu verringern sowie das Sicherheitsrisiko durch die potentielle Entflammbarkeit zu vermeiden, enthalten die Zusammensetzungen bevorzugt höchstens kleine Mengen an Lösungsmittel, beispielsweise höchstens etwa 5 Gewichtsteile, bevorzugt höchstens etwa 2 Gewichtsteile, stärker bevorzugt höchstens etwa 0,5 Gewichtsteile, noch stärker bevorzugt etwa 0 Gewichtsteile, bezogen auf 100 Gewichtsteile Bindemittel. Als Lösungsmittel können organische Verbindungen mit einem Siedepunkt von 200°C oder weniger unter Normalbedingungen verstanden werden. Hierzu zählen vor allem aliphatische und aromatische Kohlenwasserstoffe (insbesondere Alkane, Alkene, Benzol, Toluol und Xylol), Ether, Ketone, Aldehyde, Alkohole halogenierte Kohlenwasserstoffe, oder Benzine. Die Menge an leichtflüchtigen Lösungsmitteln (VOC) kann mittels DIN EN ISO 11890-1 und 11890-2 bestimmt werden.

Die Zusammensetzung kann gegebenenfalls Pigmente zum Einfärben der Zusammensetzung enthalten. Die Art der Pigmente ist dabei nicht besonders beschränkt, es können alle üblichen Pigmente verwendet werden. Bevorzugt verwendet werden können Titandioxid, Eisenoxide, Ultramarinblau, Phthalocyaninblau, Phthalocyaningrün oder Gemische davon. Der Anteil der Pigmente ist nicht besonders beschränkt, er kann von etwa 0 Gewichtsteilen bis etwa 10 Gewichtsteile, bevorzugt können von etwa 1 Gewichtsteil bis etwa 8 Gewichtsteile, besonders bevorzugt von etwa 2 Gewichtsteilen bis etwa 6 Gewichtsteile bezogen auf 100 Gewichtsteile Bindemittel enthalten sein.

Die Zusammensetzung kann gegebenenfalls weitere übliche Additive wie unkrauthemmende Stoffe, Fungizide, oder jedes weitere übliche Additiv oder Gemische davon enthalten.

Die Gesamtmenge der optionalen Bestandteile ist nicht besonders beschränkt. Diese kann von etwa 0 Gewichtsteilen bis etwa 10 Gewichtsteile, bezogen auf 100 Gewichtsteile Bindemittel, bevorzugt von etwa 0 Gewichtsteilen bis etwa 5 Gewichtsteile, besonders bevorzugt von etwa 0 Gewichtsteilen bis etwa 2 Gewichtsteile betragen.

Die Zusammensetzung wird als Fugenmaterial eingesetzt. Das Fugenmaterial wird erfindungsgemäß in einem Verfahren zur Herstellung einer Fuge bei einem Oberflächenbelag eingesetzt, welches die Schritte umfasst:
(i) Aufbringen von Einzelelementen eines Oberflächenbelags auf eine Oberfläche, so dass sich ein Spalt zwischen den Einzelelementen des Oberflächenbelags ergibt;
(ii) gegebenenfalls Benetzen der Einzelelemente des Oberflächenbelags mit Wasser;
(iii) Einbringen der Zusammensetzung in den Spalt zwischen den Einzelelementen des Oberflächenbelags;
(iv) gegebenenfalls Nachspülen des Bereichs der Einzelelemente des Oberflächenbelags mit Wasser; und
(v) Härten der Zusammensetzung.

Bei dem erfindungsgemäßen Verfahren werden Einzelelemente eines Oberflächenbelags auf eine Oberfläche aufgebracht. Die Oberfläche ist nicht besonders beschränkt und kann horizontal oder vertikal ausgerichtet sein oder beliebig geneigt sein und kann sich im Außenbereich oder im Innenbereich befinden. Bevorzugt kann die Oberfläche ein Boden oder eine Wand sein. Die Zusammensetzung kann bevorzugt im Außenbereich eingesetzt werden.

Die Einzelelemente des Oberflächenbelags können aus allen üblichen Materialien bestehen. Hierzu gehören u.a. Pflastersteine, Natursteine, Betonelemente, Klinker, Kieselsteine, Lesesteine, Fliesen, Holzelemente oder Gemische davon.

Die Einzelelemente werden nebeneinander auf die Oberfläche aufgebracht, so dass sich dazwischen ein Spalt ergibt. Die Breite des Spalts, d.h. der Abstand zwischen den Einzelelementen, ist nicht besonders beschränkt. Sie kann beispielsweise von etwa 0,1 mm bis etwa 150 mm, bevorzugt von etwa 0,5 mm bis etwa 60 mm, insbesondere bevorzugt von etwa 1 mm bis etwa 10 mm betragen.

Dann wird gegebenenfalls Wasser auf die Einzelelemente des Oberflächenbelags aufgebracht, um eine hydrophile Oberfläche bereitzustellen und damit Verunreinigungen der Einzelelemente des Oberflächenbelags mit dem Copolymer, das durch Polymerisation von Dicyclopentadien oder Cyclopentadien und einem Ester einer ungesättigten Fettsäure erhältlich ist, oder weiteren optionalen Bestandteilen der Zusammenfassung zu vermeiden.

Die Zusammensetzung wird anschließend nach auf dem Fachgebiet üblichen Verfahren in den Spalt zwischen den Einzelelementen des Oberflächenbelags eingebracht. Dazu wird zunächst das Copolymer, das durch Polymerisation von Dicyclopentadien oder Cyclopentadien und einem Ester einer ungesättigten Fettsäure erhältlich ist, mit der Mehrzahl an wasserunlöslichen Teilchen und den optionalen Bestandteilen gemischt. Das Mischen des Copolymers, das durch Polymerisation von Dicyclopentadien oder Cyclopentadien und einem Ester einer ungesättigten Fettsäure erhältlich ist, mit der Mehrzahl an wasserunlöslichen Teilchen kann vor dem Einbringen durchgeführt werden, alternativ kann das Mischen vorab durchgeführt werden und die Zusammensetzung unter Luftabschluss aufbewahrt werden. Bevorzugt wird das Mischen vorab durchgeführt und die Zusammensetzung unter Luftabschluss aufbewahrt. Typischerweise werden das Copolymer, das durch Polymerisation von Dicyclopentadien oder Cyclopentadien und einem Ester einer ungesättigten Fettsäure erhältlich ist, und die optionalen Bestandteile gemischt und anschließend wird die Mehrzahl an wasserunlöslichen Teilchen zugegeben.

Anschließend wird gegebenenfalls der Bereich der Einzelelemente des Oberflächenbelags mit Wasser nachgespült. Dadurch wird zum einen ein Einschlämmen der Mischung des Copolymers, das durch Polymerisation von Dicyclopentadien oder Cyclopentadien und einem Ester einer ungesättigten Fettsäure erhältlich ist, mit der Mehrzahl an wasserunlöslichen Teilchen in den Spalt zwischen den Einzelelementen des Oberflächenbelags erreicht, zum anderen können dadurch Reste an Copolymer und weiteren optionalen Bestandteilen der Zusammensetzung von der Oberfläche der Einzelelemente des Oberflächenbelags entfernt werden.

Nach dem optionalen Nachspülen härtet die Zusammensetzung unter Einwirkung von Luftsauerstoff aus. Die dabei entstehenden Fugen weisen eine sehr gute Flexibilität sowie ausgezeichnete Verseifungs- und Wetterstabilität auf. Des Weiteren besitzen sie vergleichbare und teilweise höhere Festigkeiten als handelsübliche Polybutadienöl-basierte Bindemittelformulierungen.

Durch die Verwendung von natürlichen Ölen als Ester einer ungesättigten Fettsäure können die Zusammensetzungen aus nachwachsenden Rohstoffen hergestellt werden. Des Weiteren können die vorstehenden erwähnten hervorragenden Gebrauchseigenschaften ohne die Verwendung von flüchtigen organischen Lösungsmitteln erreicht werden. Hierdurch leisten die Zusammensetzungen einen signifikanten Betrag zur Nachhaltigkeit und zum Umwelt- und Verbraucherschutz.

Die folgenden Beispiele erläutern die Erfindung, ohne diese einzuschränken.

### BEISPIELE

### Herstellungsbeispiel 1: Synthese eines Copolymers, erhältlich aus Dicyclopentadien und einem Ester einer ungesättigten Fettsäure

600 g Sojaöl wurden zusammen mit 400 g DCPD in einen Druckreaktor gefüllt und mit Stickstoff gespült. Das Reaktionsgemisch wurde dann unter Rühren auf 275°C erhitzt. Dabei wurde die Heizrate so gewählt, dass ein Druckaufbau von über 6 bar vermieden wurde. Das Reaktionsgemisch wurde bei 275°C so lange gehalten, bis eine Viskosität von 8000 mPa·s (Brookfield CAP 2000 Viskosimeter gemäß ISO 2884, 75°C, Spindel 6, 100 UpM, 90 Sek.) erreicht wurde. Dann wurde das Reaktionsgemisch auf 240°C gekühlt und bei dieser Temperatur so lange gehalten, bis eine Zielviskosität von 50000 mPa·s erreicht wurde (Brookfield CAP 2000 Viskosimeter gemäß ISO 2884, 75°C, Spindel 6, 50 UpM, 90 Sek.).

Das erhaltene Copolymer kann zur weiteren Verarbeitung bzw. Formulierung eingesetzt werden. Beispielsweise kann das DCPD-Copolymer mit Leinöl vermischt und auf eine gewünschte Zielviskosität eingestellt werden, wie in den folgenden Beispielen erläutert.

### Beispiel 2: Herstellung einer Zusammensetzung - Formulierung 1

Es wurden 40 Gewichtsteile DCPD-Copolymer aus Beispiel 1 mit 60 Gewichtsteilen Leinöl vermischt und unter Rühren homogenisiert. Diese Mischung wurde dann mit 1 Gew.-% Co-Octoat (Co-Octoat in aromatenfreiem Testbenzin D60 (25 bis 50%), 12 Gew.-% Co) versetzt und ebenfalls homogenisiert.

### Beispiel 3: Herstellung einer Zusammensetzung - Formulierung 2

Es wurden 40 Gewichtsteile DCPD-Copolymer aus Beispiel 1 mit 59,8 Gewichtsteilen Leinöl vermischt und unter Rühren homogenisiert. Im Anschluss wurden 0,2 Gew.-% Dynasylan 6498 hinzudosiert und unter Rühren homogenisiert. Diese Mischung wurde dann mit 1 Gew.-% Co-Octoat (Co-Octoat in aromatenfreiem Testbenzin D60 (25 bis 50%), 12 Gew.-% Co) versetzt und ebenfalls homogenisiert.

### Beispiel 4: Herstellung einer Zusammensetzung - Formulierung 3

Es wurden 40 Gewichtsteile DCPD-Copolymer aus Beispiel 1 mit 59 Gewichtsteilen Leinöl vermischt und unter Rühren homogenisiert. Im Anschluss wurden 1 Gew.-% Dynasylan 6498 hinzudosiert und unter Rühren homogenisiert. Diese Mischung wurde dann mit 1 Gew.-% Co-Octoat (Co-Octoat in aromatenfreiem Testbenzin D60 (25 bis 50%), 12 Gew.-% Co) versetzt und ebenfalls homogenisiert.

### Vergleichsbeispiel 5: Holzöl - Formulierung 4

Als erstes Vergleichsbeispiel wurde handelsübliches Holzöl/Tungöl der Firma Merck mit einer angegebenen lodzahl von >220 getestet. Hierzu wurde das reine Holzöl/Tungöl mit 1 Gew.-% Co-Octoat (Co-Octoat in aromatenfreiem Testbenzin D60 (25 bis 50%), 12 Gew.-% Co) versetzt und homogenisiert.

### Vergleichsbeispiel 6: Polyvest 110 Polybutadienöl - Formulierung 5

Als zweites Vergleichsbeispiel wurde handelsübliches Polybutadienöl Polyvest110 (PV110) der Firma Evonik getestet. Hierzu wurde das reine Polybutadienöl mit 1 Gew.-% Co-Octoat (Co-Octoat in aromatenfreiem Testbenzin D60 (25 bis 50%), 12 Gew.-% Co) versetzt und homogenisiert.

Um die potenzielle Vernetzungsdichte und damit die Trocknungsgeschwindigkeit abschätzen zu können, wurde die lodzahl nach NF EN ISO 3961; AFNOR NFT60-203 bestimmt. Die untersuchten Formulierungen sind in Tabelle 1 und die zugehörigen Ergebnisse der lodzahl in Tabelle 2 zusammengefasst.

**Tabelle 1: Formulierungen**

| **Formulierung** | **Zusammensetzung / Gew.-%** | **Bemerkung** |
|---|---|---|
| Formulierung 1 | DCPD-Copolymer 40,0Gew.teile, | erfindungsgemäß |
| | Leinöl 60,0 Gew.teile | |
| Formulierung 2 | DCPD-Copolymer 40,0 Gew.teile, | erfindungsgemäß |
| | Leinöl 59,8 Gew.teile, | |
| | Silan 0,2% | |
| Formulierung 3 | DCPD-Copolymer 40,0 Gew.teile, Leinöl 59,0 Gew.teile Silan 1,0% | erfindungsgemäß |
| Formulierung 4 | Holzöl/Tungöl 100,0% | Vergleich |
| Formulierung 5 | PV110 100,0% | Vergleich |

**Tabelle 2: Bestimmung der lodzahl für unterschiedliche Bindemittel**

| **Formulierung** | **Iodzahl (g l / 100 g)** |
|---|---|
| Formulierung 1 | 250 ± 3 |
| Formulierung 2 | 250 ± 3 |
| Formulierung 3 | 250 ± 3 |
| Formulierung 4 | >211 |
| Formulierung 5 | 444 ± 3 |

### Herstellung des Fugenmaterials und Testen

Fugenmaterial wurde durch Mischen von 89,1 g einer vorstehend genannten Formulierung mit 0,9 g Co-Octoat (12 Gew.-% Co in Testbenzin D60) und 2910 g Quarzsand (H31, mit einer mittleren Körnung von -250 µm) hergestellt.

Die Mischung wurde in einem Hobartplanetenmischer (Hobart GmbH, Modell: HSM10) auf Geschwindigkeitsstufe 4 von 6 mit 221 Umdrehungen pro Minute für 2 Minuten mit einem Flachrührer Modell B (Hobart GmbH) vermengt. Für die Herstellung der Prüfkörper zur Bestimmung der Härteentwicklung wurde eine Holzform aus kunstharzbeschichtetem Holz mit den Außenmaßen L = 498 mm, B= 62 mm, H= 312 mm und 16 innenliegenden Losformen zur Herstellung von Prüfkörpern mit den Maßen L=22,36 mm, B=22,36 mm, H=171 mm verwendet. Der Fugenmörtel wurde in diese Form eingebracht, verdichtet und für 24 h bei 18 bis 30 °C und einer Luftfeuchte von 40 bis 75 % in der Form gelagert. Dann erfolgte das Ausschalen und eine Nachreifung der Kerne an der Luft über 24 Stunden. Die Bestimmung der Biegefestigkeit wurde mittels eines Festigkeitsprüfgerätes (Modell PFG, +GF+) gemäß VdG Merkblatt P 72 durchgeführt.

Es wurden zwei unterschiedliche Prüfmethoden, die unterschiedliche Umwelteinflüsse und Behandlungen simulieren sollen, denen der Fugenmörtel typischerweise in seinem Lebenszyklus ausgesetzt ist, zur Prüfung der Festigkeit herangezogen. Prüfvariante 1 simuliert ein Aushärten und Vernetzen unter trockenen Bedingungen. Zu dieser Untersuchung wurden vier Prüfkörper bereitgestellt, je zwei Prüfkörper pro Zeitintervall, die zur Doppelbestimmung dienen. Zuerst wurden die Sofortfestigkeiten gemessen, d.h. sobald die Nachreifung von 24 Stunden abgeschlossen war. Der zweite Prüfpunkt war fünf Tage nach der Nachreife erreicht. Während dieser Zeit wurden die Prüfkörper unter den schon oben genannten Bedingungen zwischengelagert. Nach Ablauf der jeweiligen Lagerzeit wurden die Prüfkörper mit einem Festigkeitsprüfgerät gebrochen.

Die zweite Methode simuliert einen Nass/Trockenzyklus. Die Überprüfung der Regenerationsfähigkeit, der Nassbeständigkeit und der Endfestigkeit nach Auswaschung der unterschiedlichen Fugenmörtel wurde dort in den Fokus gesetzt. Für diese Prüfmethode wurden acht Prüfkörper bereitgestellt, je zwei Prüfkörper pro Zeitintervall, die zur Doppelbestimmung herangezogen werden. Die Herstellung der Prüfkörper entspricht den obigen Abläufen. Nach der Ausschalung und der Nachreifezeit von 24 Stunden wurde der erste Prüfpunkt gemessen. Danach wurden unverzüglich alle übrigen Prüfkörper in entmineralisiertem Wasser (1 Liter) gelagert. Das Gefäß wurde dabei so gewählt, dass die gesamten Prüfkörper im Wasser waagrecht gelagert wurden und dabei keinen Querkräften ausgesetzt waren. Die Lagerung der Prüfkörper im Wasser erfolgte bei einer Temperatur von 18 bis 30 °C und über einen Zeitraum von sechs Tagen. Danach wurden die Prüfkörper vorsichtig aus dem Wasser gehoben und auf Zellstoffpapier abgelegt. Zwei Prüfkörper wurden dann unverzüglich auf Festigkeit geprüft. Die restlichen Prüfkörper wurden bei den oben genannten Bedingungen weiter zwischengelagert. Einen Tag später wurde die nächste Doppelbestimmung durchgeführt. Weitere vier Tage später, also fünf Tage nach der Wasserentnahme, wurde die letzte Doppelbestimmung durchgeführt. Die Ergebnisse sind in Figur 1 dargestellt.

Aus Figur 1 und Tabelle 3 geht hervor, dass Formulierung 1 überraschend ein vergleichbares Festigkeitsniveau erreicht wie die kommerziell erhältliche Formulierung 5 auf Basis von Polybutadien. Dies ist dahingehend überraschend, als dass die lodzahl und damit die Anzahl an Doppelbindungen im Falle der Formulierung 1 deutlich geringer sind als im Falle der Formulierung 5 auf Basis von Polybutadien. Man hätte vermuten können, dass aufgrund der geringeren Anzahl an Doppelbindungen die Festigkeiten deutlich niedriger ausfallen, da dadurch die Möglichkeiten einer oxidativen Vernetzung reduziert werden. Weiterhin zeigt sich in den Formulierungen 2 und 3, dass die Festigkeit durch Zugabe von Silanen deutlich gesteigert werden kann. Auch ist zu sehen, dass die nicht erfindungsgemäße Formulierung 4 basierend auf Holzöl/Tungöl deutlich schlechtere Festigkeiten aufweist, obwohl die lodzahl vergleichbar zur Formulierung 1 ist.

Im Falle der Formulierung 5 wurde ein unangenehm "muffiger" Geruch festgestellt, während bei den erfindungsgemäßen Formulierungen 1 bis 3 ein charakteristischer natürlicher Ölgeruch festgestellt wurde.

**Tabelle 3: Festigkeiten (in N cm⁻²) von Prüfkörpern für unterschiedliche Formulierungen**

| | 2 Tage Trocknung | 6 Tage Nass | 1 Tag Trocknung | 5 Tage Trocknung |
|---|---|---|---|---|
| Formulierung 1 | 500 N cm⁻² | 170 N cm⁻² | 200 N cm⁻² | 985 N cm⁻² |
| Formulierung 2 | 600 N cm⁻² | 250 N cm⁻² | 310 N cm⁻² | 1210 N cm⁻² |
| Formulierung 3 | 800 N cm⁻² | 350 N cm⁻² | 410 N cm⁻² | 1400 N cm⁻² |
| Formulierung 4 | 120 N cm⁻² | 0 N cm⁻² | 0 N cm⁻² | 0 N cm⁻² |
| Formulierung 5 | 530 N cm⁻² | 200 N cm⁻² | 210 N cm⁻² | 765 N cm⁻² |

Tabelle 3 beschreibt die nach VdG Merkblatt P 72 erhaltenen Festigkeiten nach 2 Tagen oxidativer Trocknung bei Raumtemperatur. Im Anschluss wurden die Prüfkörper für 6 Tage in VE-Wasser gelagert und direkt im Anschluss die Festigkeiten im nassen Zustand bestimmt. Die Festigkeiten wurden dann erneut nach erfolgter Trockenlagerung bei Raumtemperatur nach 1 und 5 Tagen untersucht.

### Herstellung einer Fuge

Auf eine verdichtete mit Sand bedeckte Fläche wurden rechteckige Steinplatten mit einer Größe von 20 cm x 10 cm in einem Abstand von 1 bis 2 cm verlegt und mit Wasser bespritzt. Fugenmaterial wurde durch Mischen von 89,1 g der Formulierung 1 mit 0,9 g Co-Octoat (12 Gew.-% Co in Testbenzin D60) und 2910 g Quarzsand (H31, mit einer mittleren Körnung von -250 µm) hergestellt und durch Einfegen in den Spalt zwischen den Steinplatten eingebracht. Anschließend wurden die Steinplatten mit Wasser nachgespült. Das Aushärten des Fugenmaterials erfolgte über Nacht und wurde am 3. Tag bewertet.

Das Fugenmaterial war fest, formstabil und zeigte eine gute Flankenhaftung. Nach erfolgtem Regen konnte das Wasser schnell ablaufen und es war keine Staunässe erkennbar. Auch nach 1 Jahr Außenbewitterung zeigte sich ein fester Untergrund. Zusätzlich war keine Unkrautbildung zwischen den behandelten Fugen zu erkennen. An unbehandelten Stellen war allerdings eine deutliche Unkrautbildung sichtbar.

## Patentansprüche

1. Ein Verfahren zur Herstellung einer Fuge bei einem Oberflächenbelag:
(i) Aufbringen von Einzelelementen eines Oberflächenbelags auf eine Oberfläche, so dass sich ein Spalt zwischen den Einzelelementen des Oberflächenbelags ergibt;
(ii) gegebenenfalls Benetzen der Einzelelemente des Oberflächenbelags mit Wasser;
(iii) Einbringen einer Zusammensetzung in den Spalt zwischen den Einzelelementen des Oberflächenbelags;
(iv) gegebenenfalls Nachspülen des Bereichs der Einzelelemente des Oberflächenbelags mit Wasser; und
(v) Härten der Zusammensetzung;
wobei die Zusammensetzung umfasst
eine Mehrzahl an wasserunlöslichen Teilchen; und
ein Copolymer, das durch Polymerisation von Dicyclopentadien oder Cyclopentadien und einem Ester einer ungesättigten Fettsäure erhältlich ist.

2. Das Verfahren gemäß Anspruch 1, wobei die wasserunlöslichen Teilchen aus Sand, Glaspartikeln, Glaskugeln, Hohlglaskugeln, Feldspat, Ton, Lehm, Talk, Mineralen der Glimmergruppe, Kaolin, Kieselerde, Kreide, Dolomit, Baryt, Holzmehl, Zellstoffen, Textilfasern, Gewebeschnitzel, Kork, Weizenspreu, Polymerpartikeln, gemahlenen Polymeren oder Gemischen davon ausgewählt sind.

3. Das Verfahren gemäß Anspruch 1 oder 2, wobei der Ester in Form eines natürlichen Öls eingesetzt wird.

4. Das Verfahren gemäß Anspruch 3, wobei das natürliche Öl aus Pflanzenölen, bevorzugt aus Sojaöl, Leinöl, Baumwollsamenöl, Maisöl, Safloröl, Tungöl, Holzöl, Sonnenblumenöl, Oiticikaöl, Rüböl, Perillaöl, Mohnsamenöl, Ricineenöl, Ricinusöl, Sesamöl, Weizenkeimöl, Erdnussöl, Distelöl, Hanföl, Traubenkernöl, Walnussöl, Lackleinöl, Johannisbeerkernöl, Perillasamenöl, Wildrosenöl und Gemischen davon ausgewählt ist, stärker bevorzugt aus Sojaöl, Leinöl, und Gemischen davon ausgewählt ist, noch stärker bevorzugt Sojaöl ist.

5. Das Verfahren gemäß einen der Ansprüche 1 bis 4, wobei die Zusammensetzung ferner einen Ester einer ungesättigten Fettsäure enthält, wobei der Ester bevorzugt in Form eines natürlichen Öls vorliegt.

6. Das Verfahren gemäß einen der Ansprüche 1 bis 5, wobei die Zusammensetzung ferner ein Sikkativ, bevorzugt ausgewählt aus Fettsäuresalzen des Co, Mn, Fe, Ni, Zr Ce, Ti, Bi oder Gemischen davon, umfasst.

7. Das Verfahren gemäß einen der Ansprüche 1 bis 6, wobei die Zusammensetzung ferner ein Silan, bevorzugt ausgewählt aus alkoxygruppenhaltigen Epoxy-funktionalisierten Silanen, Aminosilanen oder Vinylsilanen, umfasst.

8. Das Verfahren gemäß einem der Ansprüche 1 bis 7, wobei die Oberfläche sich im Außenbereich oder im Innenbereich befindet.

9. Das Verfahren gemäß einem der Ansprüche 1 bis 8, wobei die Einzelelemente des Oberflächenbelags aus Pflastersteinen, Natursteinen, Betonelementen, Klinkern, Kieselsteinen, Lesesteinen, Fliesen, Holzelementen oder Gemischen davon ausgewählt sind.

10. Verwendung eines Copolymers, das durch Polymerisation von Dicyclopentadien oder Cyclopentadien und einem Ester einer ungesättigten Fettsäure erhältlich ist, zum Verfugen.

11. Die Verwendung gemäß Anspruch 10, wobei das Copolymer vor dem Verfugen mit einer Mehrzahl an wasserunlöslichen Teilchen gemischt wird.

## Claims

1. A method for producing a joint in a surface covering:
(i) applying individual elements of a surface covering to a surface so that a gap is formed between the individual elements of the surface covering;
(ii) optionally wetting the individual elements of the surface covering with water;
(iii) introducing a composition into the gap between the individual elements of the surface covering;
(iv) optionally rinsing the area of the individual elements of the surface covering with water; and
(v) curing the composition;
wherein the composition comprises
a plurality of water-insoluble particles; and
a copolymer obtainable by polymerization of dicyclopentadiene or cyclopentadiene and an ester of an unsaturated fatty acid.

2. The method according to claim 1, wherein the water-insoluble particles are selected from sand, glass particles, glass beads, hollow glass beads, feldspar, clay, loam, talc, mica group minerals, kaolin, silica, chalk, dolomite, barite, wood flour, cellulose, textile fibers, fabric chips, cork, wheat chaff, polymer particles, ground polymers or mixtures thereof.

3. The method according to claim 1 or 2, wherein the ester is used in the form of a natural oil.

4. The method according to claim 3, wherein the natural oil is selected from vegetable oils, preferably from soybean oil, linseed oil, cottonseed oil, corn oil, safflower oil, tung oil, wood oil, sunflower oil, oiticika oil, rapeseed oil, perilla oil, poppy seed oil, ricineen oil, ricinus oil, sesame oil, wheat germ oil, peanut oil, thistle oil, hemp oil, grapeseed oil, walnut oil, refined linseed oil, black currant seed oil, perilla seed oil, wild rose oil and mixtures thereof, more preferably is selected from soybean oil, linseed oil and mixtures thereof, even more preferably is soybean oil.

5. The method according to any one of claims 1 to 4, wherein the composition further comprises an ester of an unsaturated fatty acid, wherein the ester preferably is in the form of a natural oil.

6. The method according to any one of claims 1 to 5, wherein the composition further comprises a siccative, preferably selected from fatty acid salts of Co, Mn, Fe, Ni, Zr, Ce, Ti, Bi or mixtures thereof.

7. The method according to any one of claims 1 to 6, wherein the composition further comprises a silane, preferably selected from alkoxy group-containing epoxy-functionalized silanes, aminosilanes or vinylsilanes.

8. The method according to any one of claims 1 to 7, wherein the surface is present in an outdoor area or indoor area.

9. The method according to any one of claims 1 to 8, wherein the individual elements of the surface covering are selected from paving stones, natural stones, concrete elements, clinkers, pebbles, field stones, tiles, wooden elements or mixtures thereof.

10. Use of a copolymer obtainable by polymerization of dicyclopentadiene or cyclopentadiene and an ester of an unsaturated fatty acid for joining.

11. The use according to claim 10, wherein the copolymer is mixed with a plurality of water-insoluble particles prior to joining.

## Revendications

1. Procédé de fabrication d'un joint dans un revêtement de surface comprenant :
(i) le dépôt d'éléments individuels d'un revêtement de surface sur une surface de sorte qu'une fente se forme entre les éléments individuels du revêtement de surface ;
(ii) le cas échéant le mouillage des éléments individuels du revêtement de surface avec de l'eau ;
(iii) l'introduction d'une composition dans la fente entre les éléments individuels du revêtement de surface ;
(iv) le cas échéant le rinçage de la zone des éléments individuels du revêtement de surface avec de l'eau ; et
(v) le durcissement de la composition ;
dans lequel la composition comprend
une pluralité de particules insolubles dans l'eau ; et
un copolymère qui peut être obtenu par polymérisation de dicyclopentadiène ou de cyclopentadiène et d'un ester d'un acide gras insaturé.

2. Procédé selon la revendication 1, dans lequel les particules insolubles dans l'eau sont choisies parmi le sable, les particules de verre, les sphères de verre, les sphères creuses de verre, le feldspath, le limon, l'argile, le talc, les minéraux du groupe du mica, le kaolin, la silice, la craie, la dolomite, la barytine, la sciure, les celluloses, les fibres textiles, les lambeaux de tissu, le liège, la balle de blé, les particules de polymère, les polymères broyés, ou des mélanges de ceux-ci.

3. Procédé selon la revendication 1 ou 2, dans lequel l'ester est mis en oeuvre sous la forme d'une huile naturelle.

4. Procédé selon la revendication 3, dans lequel l'huile naturelle est choisie parmi les huiles végétales, de préférence parmi l'huile de soja, l'huile de lin, l'huile de graines de coton, l'huile de maïs, l'huile de carthame, l'huile de tung, l'huile de bois, l'huile de tournesol, l'huile d'oïticica, l'huile de colza, l'huile de périlla, l'huile de graines de pavot, l'huile ricinée, l'huile de ricin, l'huile de sésame, l'huile de germe de blé, l'huile d'arachide, l'huile de chardon, l'huile de chanvre, l'huile de pépins de raisin, l'huile de noix, l'huile de lin laquée, l'huile de pépins de groseille, l'huile de graines de périlla, l'huile de rose musquée et des mélanges de celles-ci, plus préférablement parmi l'huile de soja, l'huile de lin et des mélanges de celles-ci, encore plus préférablement est l'huile de soja.

5. Procédé selon l'une des revendications 1 à 4, dans lequel la composition contient en outre un ester d'un acide gras insaturé, l'ester se présentant de préférence sous la forme d'une huile naturelle.

6. Procédé selon l'une des revendications 1 à 5, dans lequel la composition contient en outre un siccatif, de préférence choisi parmi les sels d'acide gras de Co, Mn, Fe, Ni, Zr, Ce, Ti, Bi ou des mélanges de ceux-ci.

7. Procédé selon l'une des revendications 1 à 6, dans lequel la composition contient en outre un silane, de préférence choisi parmi les silanes, aminosilanes ou vinylsilanes fonctionnalisés par un époxy contenant des groupes alcoxy.

8. Procédé selon l'une des revendications 1 à 7, dans lequel la surface se trouve à l'extérieur ou à l'intérieur.

9. Procédé selon l'une des revendications 1 à 8, dans lequel les éléments individuels du revêtement de surface sont choisis parmi les pierres de parement, les pierres naturelles, les éléments en béton, les clinkers, les graviers, les galets, les carrelages, les éléments en bois ou des mélanges de ceux-ci.

10. Utilisation d'un copolymère qui peut être obtenu par polymérisation de dicyclopentadiène ou de cyclopentadiène et d'un ester d'un acide gras insaturé, pour le j ointage.

11. Utilisation selon la revendication 10, dans laquelle le copolymère est mélangé avant le j ointage avec une pluralité de particules insolubles dans l'eau.
